# EUROPÄISCHE PATENTANMELDUNG

(11) **EP 2 131 598 A2**
(43) Veröffentlichungstag der Anmeldung: **09.12.2009**
(21) Anmeldenummer: 09161996.5
(22) Anmeldetag: 05.06.2009
(51) Int. Cl.: H04N 13/00

(54) **Stereokamerasystem und Verfahren zum Ermitteln mindestens eines Kalibrierfehlers eines Stereokamerasystems**

(30) Priorität: 05.06.2008 DE 102008026876
(71) Anmelder: Hella KGaA Hueck & Co., 59552 Lippstadt (DE)
(72) Erfinder: Hoffmann, Ingo, 10437, Berlin (DE); Herntrich, Matthias, 13189, Berlin (DE)
(74) Vertreter: Schaumburg, Thoenes, Thurn, Landskron, Eckert

(57) **Zusammenfassung**

Die Erfindung betrifft ein Stereokamerasystem (16) sowie ein Verfahren zum Ermitteln mindestens eines Kalibrierfehlers eines Stereokamerasystems (16). Mit Hilfe von mindestens zwei einzelnen Kameras (16a, 16b) des Stereokamerasystems (16) wird jeweils eine Bildfolge mit Bildern mit Abbildungen eines Erfassungsbereichs vor einem Fahrzeug (12) bei einer Fahrt des Fahrzeugs (12) entlang einer Fahrbahn (14) aufgenommen. Dabei werden den Bildern der Bildfolgen entsprechende Bilddaten erzeugt. Die erzeugten Bilddaten werden verarbeitet, wobei der Verlauf mindestens eines Fahrbahnrandes der Fahrbahn (14) ermittelt wird. Ausgehend von dem ermittelten Verlauf des mindestens einen Fahrbahnrandes der Fahrbahn (14) wird mindestens ein Kalibrierfehler ermittelt.

## Beschreibung

Die Erfindung betrifft ein Stereokamerasystem sowie ein Verfahren zum Ermitteln mindestens eines Kalibrierfehlers eines Stereokamerasystems. Mindestens zwei einzelne Kameras des Stereokamerasystems nehmen jeweils eine Bildfolge mit Bildern mit Abbildungen eines Erfassungsbereichs vor einem Fahrzeug bei einer Fahrt des Fahrzeugs entlang einer Fahrbahn auf und erzeugen den Bildern der Bildfolgen entsprechende Bilddaten, die weiterverarbeitet werden.

Es sind eine Vielzahl von Stereokamerasystemen zum Einsatz in Fahrzeugen bekannt. In den Dokumenten WO 2006/069978 A2, WO 2006/021700 A1 und US 7,149,327 B2 sind solche Anordnungen von Stereokamerasystemen in Kraftfahrzeugen bekannt. In den Dokumenten WO 2006/069978 A2 und WO 2006/021700 A1 sind weiterhin Verfahren zur Kalibrierung eines Stereokamerasystems beschrieben, wobei im Dokument WO 2006/021700 A1 eine Einzelkalibrierung der einzelnen Kameras des Stereokamerasystems durchgeführt wird.

Aus dem Dokument DE 103 48 684 A1 ist die Möglichkeit der Stereoskopie mit einer einzigen Einzelkamera und einer Spiegelanordnung bekannt. Weiterhin ist aus dem Dokument EP 1 734 335 A1 ein dreidimensionales Messverfahren zur Höhenmessung bekannt, bei dem ein Verfahrensschritt zur Kalibrierung eines Stereokamerasystems der Messanordnung durchgeführt wird.

Die aus dem Stand der Technik bekannten Kalibrierverfahren sind entweder relativ aufwendig oder nicht automatisch durchführbar. Ferner wird durch einige der bekannten Kalibrierverfahren die im Automotive-Bereich erforderliche Genauigkeit bei Entfernungsmessungen mit Hilfe eines Stereokamerasystems nicht erreicht.

Aufgabe der Erfindung ist es, ein Verfahren zum Ermitteln mindestens eines Kalibrierfehlers eines Stereokamerasystems sowie ein Stereokamerasystem anzugeben, bei denen ein Kalibrierfehler einfach ermittelt werden kann und mit dessen Hilfe eine relativ hohe Kalibriergenauigkeit erreicht wird.

Diese Aufgabe wird durch ein Verfahren mit den Merkmalen des Patentanspruchs 1 sowie durch ein Stereokamerasystem mit den Merkmalen des unabhängigen Vorrichtungsanspruchs gelöst. Vorteilhafte Weiterbildungen der Erfindung sind in den abhängigen Patentansprüchen angegeben.

Durch ein Verfahren mit den Merkmalen des Patentanspruchs 1 sowie durch ein Stereokamerasystem mit den Merkmalen des unabhängigen Vorrichtungsanspruchs wird erreicht, dass Kalibrierfehler mit der für den Automotive-Einsatz erforderlichen Genauigkeit ermittelt werden können. Ferner kann durch die Erfindung die korrekte Kalibrierung des Stereokamerasystems kontinuierlich überprüft und erforderlichenfalls wiederhergestellt werden. Vorzugsweise erfolgt die Bilderfassung zum Ermitteln mindestens eines Kalibrierfehlers kontinuierlich über einen längeren Zeitraum, insbesondere über die gesamte Zeitdauer des Einsatzes des Stereokamerasystems. Somit wird erreicht, dass bei entsprechender Berücksichtigung des mindestens einen ermittelten Kalibrierfehlers exakte Entfernungsmessungen mit Hilfe des Stereokamerasystems durch die Verarbeitung der Bilddaten von parallel aufgenommenen Bildern bei der Stereobildverarbeitung möglich sind. Kalibrierfehler der einzelnen Kameras des Stereokamerasystems, insbesondere durch Erschütterungen und Temperaturschwankungen, können einfach durch das Ermitteln des Kalibrierfehlers und Berücksichtigen des ermittelten Kalibrierfehlers korrigiert werden. Für diese automatisch durchführbare Kalibrierung ist im Unterschied zu einigen im Stand der Technik üblichen Kalibrierverfahren keine spezielle Kalibriervorlage erforderlich. Ferner ist eine dynamische Nachkalibrierung während des Betriebs des Stereokamerasystems möglich. Bei der Erfindung wird vorzugsweise der dreidimensionale Spurverlauf der Fahrbahn anhand einer Fahrbahnmarkierung, insbesondere Randlinie zur Begrenzung der Fahrbahn, ermittelt. Die Erfindung geht von der Erkenntnis aus, dass ansteigende und abfallende Fahrbahnabschnitte sich im statistischen Mittel ausgleichen und sich somit die Waage halten. Bei der Detektion des vorzugsweise dreidimensionalen Fahrspurverlaufs bzw. Fahrbahnverlaufs treten bei mindestens einem Kalibrierfehler charakteristische Fahrspurverläufe auf, die auf das Vorhandensein und/oder die Größe des Kalibrierfehlers schließen lassen. Dadurch ist die Möglichkeit gegeben, eine iterative Korrektur des dem ermittelten Fahrspurverlauf zugrunde liegenden Kalibrierfehlers durchzuführen. Somit kann eine Annäherung an korrekte Kalibrierwerte bzw. an eine korrekte Kalibrierung des Stereokamerasystems erreicht werden.

Bei einer Weiterbildung der Erfindung wird ein Nickwinkelfehler, ein Gierwinkelfehler und/oder ein Wankwinkelfehler des Stereokamerasystems als Kalibrierfehler ermittelt. Mit Hilfe dieser Winkelfehler kann die tatsächliche relative Lage der einzelnen Kameras des Stereokamerasystems gegenüber einzelnen Kameras einer korrekten relativen Lage dieser einzelnen Kameras zueinander auf einfache Art und Weise ermittelt und angegeben werden.

Dabei ist es bei einer Weiterbildung der Erfindung ausreichend, für mindestens eine Einzelkamera des Stereokamerasystems einen Kalibrierfehler, insbesondere einen Nickwinkelfehler, einen Gierwinkelfehler und/oder einen Wankwinkelfehler, zu ermitteln. Dabei wird vorzugsweise nur der Kalibrierfehler für eine einzige Einzelkamera des Stereokamerasystems ermittelt. Ferner können ein Gierwinkelfehler, ein Wankwinkelfehler und/oder ein Nickwinkelfehler parallel beim Verarbeiten der mit Hilfe der mindestens zwei Einzelkameras ermittelten Bildfolgen ermittelt werden. Dadurch kann sowohl das Erfassen als auch die Korrektur dieser Fehler parallel durchgeführt werden. Dadurch kann die korrekte Kalibrierung des Stereokamerasystems relativ schnell überprüft und bei Fehlern wiederhergestellt werden.

Ferner ist es vorteilhaft, einen relativen Kalibrierfehler des Stereokamerasystems infolge der relativen Lage der optischen Achsen der einzelnen Kameras zueinander zu ermitteln. Dadurch kann der aufwendige Bezug auf ein Kamerakoordinatensystem, ein Fahrzeugkoordinatensystem und/oder ein Weltkoordinatensystem zumindest für das Ermitteln der Kalibrierfehler und für den Kalibriervorgang entfallen.

Der ermittelte Kalibrierfehler kann durch eine Änderung mindestens eines im Stereokamerasystem und/oder in einem Bildverarbeitungssystem zum Verarbeiten der Bilddaten voreingestellten Parameters korrigiert werden. Als Parameter für mindestens eine einzelne Kamera kann ein Offsetwert für den Gierwinkel, ein Offsetwert für den Wankwinkel und ein Offsetwert für den Nickwinkel zur Korrektur des Kalibrierfehlers voreingestellt und/oder geändert werden.

Ferner ist es vorteilhaft, mindestens einen Fahrbahnrand der Fahrbahn mit Hilfe mindestens einer Fahrbahnlängsmarkierung zu ermitteln. Insbesondere kann eine Fahrbahnlängsmarkierung als Fahrbahnrand ermittelt werden. Die Fahrbahnmarkierung kann insbesondere eine Trenn- und/oder eine Randlinie sein. Dadurch kann der Fahrbahnrand auf relativ einfache Art und Weise auch bei unterschiedlichen Umgebungsbedingungen mit hoher Genauigkeit ermittelt werden.

Beim Verarbeiten der Bilddaten der Bildfolgen wird vorzugsweise der Verlauf des rechten Fahrbahnrandes der Fahrbahn und des linken Fahrbahnrandes der Fahrbahn detektiert. Dadurch kann der Verlauf der Fahrbahn sicher ermittelt und der mindestens eine Kalibrierfehler sicher bestimmt werden. Als für die Kalibrierung relevanter rechter und linker Fahrbahnrand kann auch eine eine Fahrspur begrenzende Trennlinie dienen.

Das Ermitteln und Korrigieren des Kalibrierfehlers des Stereokamerasystems wird automatisch ohne Mitwirkung eines Fahrers des Fahrzeugs während der Fahrt des Fahrzeugs durchgeführt. Dadurch ist eine kontinuierliche Überprüfung der Kalibrierung und erforderlichenfalls eine Korrektur der Kalibrierung des Stereokamerasystems möglich, ohne dass die Funktion eines Fahrerassistenzsystems, das die mit Hilfe des Stereokamerasystems erfassten Bilder und/oder eine mit Hilfe des Stereokamerasystems ermittelte Entfernung zu einem Objekt verarbeitet, beeinträchtigt ist.

Die binokularen Stereokamera kann Bilddaten von Graustufenbildern oder Farbbildern erzeugen. Besonders vorteilhaft ist die Verwendung einer binokularen Stereokamera mit jeweils mindestens einem CMOS-Bilderfassungssensor, der vorzugsweise Graustufenbilder erzeugt. Beispielsweise ist als Bilderfassungssensor ein Active-Pixel-Sensor vorgesehen.

Das durch den unabhängigen Vorrichtungsanspruch spezifizierte Stereokamerasystem kann in gleicher Weise weitergebildet werden, wie das Verfahren nach Anspruch 1. Insbesondere kann das Stereokamerasystem mit den in den abhängigen Patentansprüchen angegebenen Merkmalen bzw. durch entsprechende Vorrichtungsmerkmale weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: eine schematische Darstellung eines Fahrzeugs in einer Verkehrssituation als Seitenansicht, wobei das Fahrzeug ein Stereokamerasystem mit einer Entfernungsmessungsfunktion hat;
- Figur 2: die schematische Darstellung der Fahrbahnränder in einem überlagerten Bild von zwei gleichzeitig durch eine linke und eine rechte Einzelkamera des Stereokamerasystems erfassten Bildern bei exakter Kalibrierung des Stereokamerasystems und ebener Fahrbahn;
- Figur 3: eine Seitenansicht des Fahrzeugs nach Figur 1 auf einer Fahrbahn, deren Verlauf dem detektierten Verlauf der Fahrbahn nach Figur 2 entspricht;
- Figur 4: die schematische Darstellung der Fahrbahnränder in einem überlagerten Bild von zwei gleichzeitig durch die linke und die rechte Einzelkamera des Stereokamerasystems erfassten Bildern bei ebener Fahrbahn und Vorliegen eines Gierwinkelfehlers;
- Figur 5: eine Seitenansicht des Fahrzeugs nach Figur 1 auf einer Fahrbahn, deren Verlauf dem detektierten Verlauf der Fahrbahn nach Figur 4 entspricht;
- Figur 6: die schematische Darstellung der Fahrbahnränder in einem überlagerten Bild von zwei gleichzeitig durch die linke und die rechte Einzelkamera des Stereokamerasystems erfassten Bildern bei ebener Fahrbahn und Vorliegen eines Wankwinkelfehlers;
- Figur 7: eine Seitenansicht des Fahrzeugs nach Figur 1 auf einer Fahrbahn, deren Verlauf dem detektierten Verlauf der Fahrbahn nach Figur 6 entspricht;
- Figur 8: eine Heckansicht des Fahrzeugs nach Figur 7 auf einer Fahrbahn, deren Verlauf dem detektierten Verlauf der Fahrbahn nach Figur 6 entspricht;
- Figur 9: eine schematische Darstellung der Fahrbahnränder in einem überlagerten Bild von zwei gleichzeitig durch die linke und die rechte Einzelkamera des Stereokamerasystems erfassten Bildern bei ebener Fahrbahn und Vorliegen eines Nickwinkelfehlers; und
- Figur 10: eine Seitenansicht des Fahrzeugs nach Figur 1 auf einer Fahrbahn, deren Verlauf dem detektierten Verlauf der Fahrbahn nach Figur 9 entspricht.

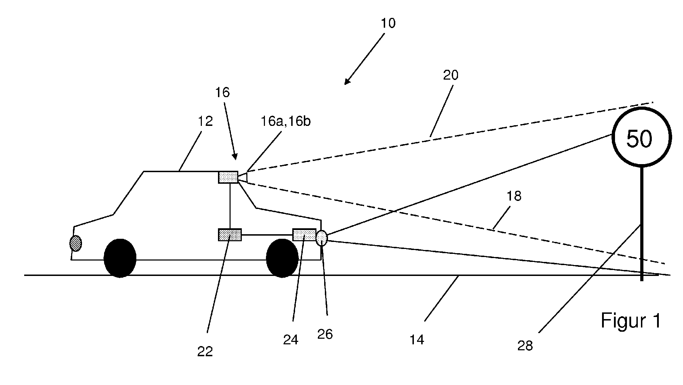

In Figur 1 ist eine Seitenansicht eines Fahrzeugs 12 in einer Verkehrssituation bei der Fahrt des Fahrzeugs 12 entlang der Fahrbahn 14 gezeigt. Das Stereokamerasystem 16 erfasst eine Bildfolge mit Bildern eines Erfassungsbereichs vor dem Fahrzeug 12. Der horizontale Erfassungsbereich ist in Figur 1 schematisch durch die Strichlinien 18, 20 veranschaulicht. Mit Hilfe der linken Einzelkamera 16a und der rechten Einzelkamera 16b des Stereokamerasystems 16 werden somit Bilder mit Abbildungen von im Erfassungsbereich vorhandenen Objekten erfasst und den Bildern entsprechende Bilddaten erzeugt. Die Bilddaten werden von dem Stereokamerasystem 16 zu einer im Fahrzeug 12 angeordneten Verarbeitungseinheit 22 übertragen und von dieser weiterverarbeitet, insbesondere um ein Fahrerassistenzsystem für den Fahrzeugführer des Fahrzeugs 12 bereitzustellen. Dazu werden mit Hilfe des Stereokamerasystems 16 die im Erfassungsbereich vor dem Fahrzeug 12 vorhandenen Objekte, wie das in Figur 1 dargestellte seitlich der Fahrbahn 14 angeordnete Verkehrsschild 28, erfasst. Mit Hilfe des Stereokamerasystems 16 kann zusätzlich die Entfernung des Stereokamerasystems 16 zum Verkehrsschild 28 sowie zu anderen Objekten mit einer hohen Genauigkeit bestimmt werden. Um diese hohe Genauigkeit bei der Entfernungsmessung zu ermöglichen, müssen die Einzelkameras 16a, 16b des Stereokamerasystems 16 exakt zueinander ausgerichtet sein. Zumindest muss die relative Lage der optischen Achsen der Einzelkameras 16a, 16b zueinander und/oder in Bezug auf ein Stereokamera- und/oder Fahrzeugkoordinatensystem bekannt sein. Das Stereokamerasystem 16 muss somit exakt auf die relative Lage der optischen Achsen der Einzelkameras 16a, 16b kalibriert werden.

Die durch das Stereokamerasystem 16 erzeugten Bilddaten des Objekts 28 werden von der Verarbeitungseinheit 22 verarbeitet, wobei die Abbildung des Objekts 28 als Objektabbildungen bzw. als Objekt detektiert und vorzugsweise der Objekttyp des Objektsklassifiziert wird. In gleicher Weise können weitere Verkehrsschilder, Leiteinrichtungen, Straßenleuchten, auf der Fahrbahn 14 vorausfahrende Fahrzeuge und auf einer Gegenfahrbahn der Fahrbahn 14 entgegenkommende Fahrzeuge als Objekte detektiert und deren Objekttyp klassifiziert werden.

Für die detektierten Objekte können jeweils Objektparameter ermittelt werden. Solche Objektparameter können eine für das jeweilige Objekt ermittelte Objektklasse, die dreidimensionale Position des Objekts, die dreidimensionale Bewegungsrichtung des Objekts, die Geschwindigkeit des Objekts und/oder die Dauer der Beobachtung des Objekts in einer mit Hilfe des Stereokamerasystems 16 des Fahrzeugs 12 erfassten Bildfolge sein. Diese Objektparameter können als Eingangsgrößen für ein Bewertungsverfahren zur Klassifizierung des Objekts durch die Verarbeitungseinheit 22 verwendet werden. Das Klassifizierungsergebnis wiederum kann dann bei der Steuerung der mit Hilfe mindestens eines Frontscheinwerfers 26 des Fahrzeugs 12 bewirkten Lichtabstrahlung und Lichtverteilung durch ein den Frontscheinwerfer 26 ansteuerndes Lichtsteuermodul 24 genutzt werden.

Die jeweilige Lage der optischen Achsen der Einzelkameras 16a, 16b wird üblicherweise in Bezug auf ein fahrzeugfestes Koordinatensystem, wie dem bereits erwähnten Fahrzeugkoordinatensystem oder einem Kamerakoordinatensystem des Stereokamerasystems 16 bezogen. Ausgehend von einem solchen+ fahrzeugfesten Koordinatensystem kann auch die Lage der optischen Achsen der Kameras 16a, 16b in Bezug auf ein Weltkoordinatensystem bestimmt werden. Das erwähnte Fahrzeugkoordinatensystem ist ein rechtwinkeliges Koordinatensystem mit einem Koordinatenursprung vorzugsweise im Schwerpunkt des Fahrzeugs 12, so dass die X-Achse nach vorne gerichtet und vorzugsweise waagerecht ist und sich in der Fahrzeuglängsmittelebene befindet. Die Y-Achse steht senkrecht auf der Fahrzeuglängsmittelebene und zeigt nach links. Die Z-Achse zeigt nach oben.

Die präzise Ausrichtung der linken Einzelkamera 16a und der rechten Einzelkamera 16b des Stereokamerasystems 16 wird durch eine Vielzahl von Umgebungseinflüssen, beispielweise durch Erschütterung während der Fahrt des Fahrzeugs 12 oder durch Alterungsprozesse, beeinflusst, weshalb eine Nachkalibrierung des Stereokamerasystems 16 auch während der Fahrt des Fahrzeugs 12 notwendig sein kann.

Die Abweichungen der tatsächlichen Ausrichtung der optischen Achsen der Einzelkameras 16a, 16b relativ zueinander von ihrer korrekten relativen Ausrichtung setzten sich im Wesentlichen aus drei möglichen Winkelfehlern, dem Gierwinkelfehler, dem Wankelwinkelfehler und dem Nickwinkelfehler, zusammen. Bezogen auf ein Kamerakoordinatensystem, das die gleiche Ausrichtung wie das Fahrzeugkoordinatensystem hat, nur dass sich der Koordinatenursprung auf der optischen Achse der Kamera innerhalb der Kamera befindet, ist der Gierwinkel einer Kamera ein Winkel, der sich aus einer Drehung um die Z-Achse ergibt. Der Wankelwinkel einer Kamera ist ein Winkel, der sich aus einer Drehung um die X-Achse ergibt und der Nickwinkel einer Kamera ist ein Winkel, der sich aus einer Drehung um die Y-Achse ergibt.

Bei dem Verfahren zur Kalibrierung des Stereokamerasystems 16 gemäß der beschriebenen Ausführungsform der Erfindung erfolgt die Kalibrierung mit Hilfe von Fahrspurmarkierungen bzw. Fahrbahnränder der Fahrbahn 14 oder mit Hilfe der Fahrbahnränder der Fahrbahn 14. Hierzu wird von dem Stereokamerasystem 16 eine Bildfolge aus Bildern mit Abbildungen des Erfassungsbereichs vor dem Fahrzeug 12 aufgenommen und den Bildern entsprechende Bilddaten erzeugt. Bei der Verarbeitung der Bilddaten werden in den Bildern jeweils die Abbildungen der Fahrspurmarkierungen bzw. der Fahrbahnränder der Fahrbahn 14 mit Hilfe eines durch die Verarbeitungseinheit 22 hinterlegten Bildverarbeitungsprogramms detektiert.

Das Detektieren der Fahrspurmarkierungen bzw. Fahrbahnränder erfolgt jeweils separat für das von der linken Kamera 16a des Stereokamerasystems 16 und das von der rechten Kamera 16b des Stereokamerasystems 16 zum gleichen Zeitpunkt aufgenommene Bild, d.h. für ein gleichzeitig aufgenommenes Bildpaar. Die Detektierung der Fahrbahnmarkierungen erfolgt nicht nur zu einem Zeitpunkt, sondern in mehreren, vorzugsweise allen, Bildern der vom Stereokamerasystem 16 aufgenommen Bildfolge. Auf diese Weise kann eine Abbildung des dreidimensionalen Verlaufs der Fahrbahn 14 ermittelt werden, wobei für das weitere Vorgehen insbesondere der vertikale Verlauf der Fahrbahn 14 von Interesse ist. Ist das Stereokamerasystem 16 exakt auf die relative Lage der optischen Achsen der Kameras 16a, 16b kalibriert, entspricht der detektierte Verlauf der Fahrbahn 14 dem tatsächlichen Verlauf der Fahrbahn 14. Liegt ein Gierwinkelfehler, Wankwinkelfehler und/oder Nickwinkelfehler vor, so weicht der detektierte Verlauf der Fahrbahn 14 von dem tatsächlichen Verlauf der Fahrbahn 14 ab. Diese Abweichung des detektierten Verlaufs der Fahrbahn 14 und des tatsächlichen Verlaufs der Fahrbahn 14 weist für den Gierwinkelfehler, den Wankwinkelfehler und den Nickwinkelfehler jeweils einen charakteristischen Verlauf auf, der in den folgenden Figuren gezeigt wird.

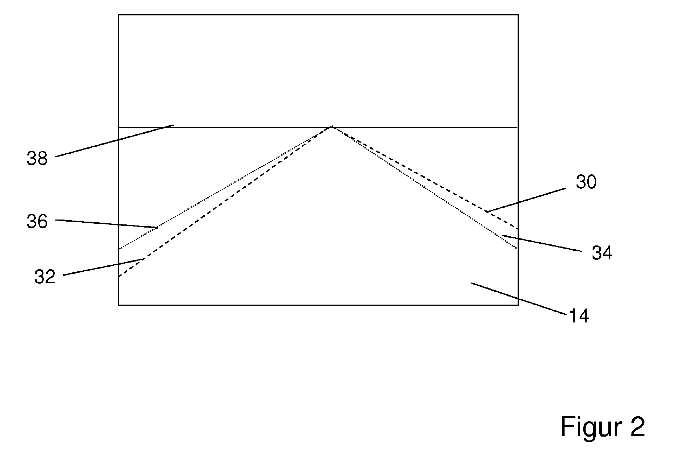

In Figur 2 ist die schematische Darstellung der Fahrbahnränder in einem überlagerten Bild von zwei gleichzeitig durch eine linke und eine rechte Einzelkamera16a, 16b des Stereokamerasystems 16 erfassten Bildern bei exakter Kalibrierung des Stereokamerasystems 16 und ebener Fahrbahn gezeigt. Die Bilder umfassen jeweils eine Abbildung eines Erfassungsbereichs vor dem Fahrzeug 12. Die Strichlinie 30 zeigt die aus den Bildern der rechten Einzelkamera 16b des Stereokamerasystems 16 mit Hilfe der Verarbeitungseinheit 22 detektierte Abbildung der rechten Fahrbahnmarkierung. Die Strichlinie 32 zeigt die aus den Bildern der rechten Einzelkamera 16b des Stereokamerasystems 16 mit Hilfe der Verarbeitungseinheit 22 detektierte Abbildung der linken Fahrbahnmarkierung. Ebenso zeigen die Punktlinien 34 und 36 die aus den Bildern der linken Einzelkamera 16a des Stereokamerasystems 16 mit Hilfe der Verarbeitungseinheit 22 detektierten Abbildungen der linken bzw. rechten Fahrbahnmarkierung. Die Strichlinien 30 und 32 laufen in einem Punkt auf einem Horizont 38 zusammen. Ebenso laufen die Punktlinien 34 und 36 in einem Punkt auf dem Horizont 38 zusammen. Die Punkte, in denen sich die Strichlinien 30 und 32 und die Punktlinien 34 und 36 schneiden, fallen zusammen.

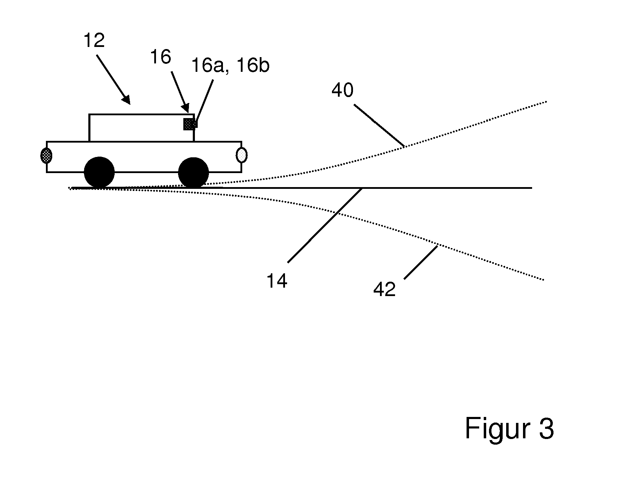

In Figur 3 ist eine Seitenansicht des Fahrzeugs 12 nach Figur 1 auf der Fahrbahn 14 dargestellt, deren Verlauf dem detektierten Verlauf der Fahrbahn 14 nach Figur 2 entspricht. Aus den in Figur 2 gezeigten, jeweils aus den Bildern der linken Kamera 16a bzw. der rechten Kamera 16b des Stereokamerasystems 16 detektierten Abbildungen der linken bzw. rechten Fahrbahnmarkierung ergibt sich, dass die Fahrbahn 14 eben ist. Eine nach oben verlaufende Fahrbahn 40 oder eine nach unten verlaufende Fahrbahn 42 hätte einen anderen als in Figur 2 gezeigten Verlauf der Abbildungen der linken und rechten Fahrbahnmarkierung in den Bildern der linken Kamera 16a bzw. der rechten Kamera 16b des Stereokamerasystems 16 zur Folge.

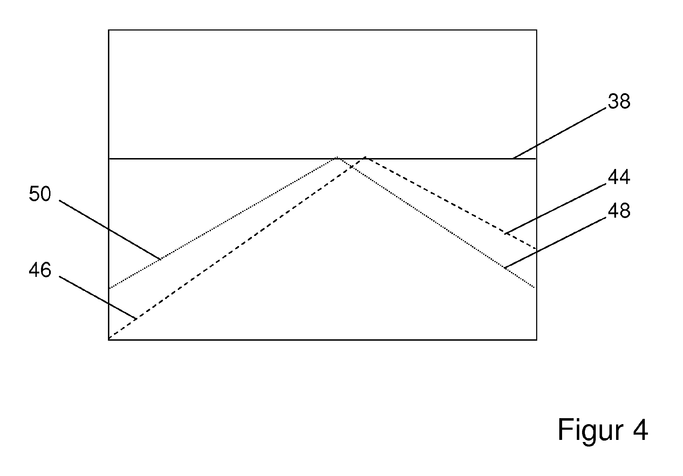

In Figur 4 ist die schematische Darstellung der Fahrbahnränder in einem überlagerten Bild von zwei gleichzeitig durch eine linke und eine rechte Einzelkamera16a, 16b des Stereokamerasystems 16 erfassten Bildern bei ebener Fahrbahn und Vorliegen eines Gierwinkelfehlers gezeigt. Die Bilder umfassen jeweils eine Abbildung eines Erfassungsbereichs vor dem Fahrzeug 12. Die Strichlinie 44 zeigt die aus den Bildern der rechten Einzelkamera 16b des Stereokamerasystems 16 mit Hilfe der Verarbeitungseinheit 22 detektierte Abbildung der rechten Fahrbahnmarkierung. Die Strichlinie 46 zeigt die aus den Bildern der rechten Einzelkamera 16b des Stereokamerasystems 16 mit Hilfe der Verarbeitungseinheit 22 detektierte Abbildung der linken Fahrbahnmarkierung. Ebenso zeigen die Punktlinien 48 und 50 die aus den Bildern der linken Einzelkamera 16a des Stereokamerasystems 16 mit Hilfe der Verarbeitungseinheit 22 detektierten Abbildungen der linken bzw. rechten Fahrbahnmarkierung. Die Strichlinien 44 und 46 laufen in einem Punkt auf einem Horizont 38 zusammen. Ebenso laufen die Punktlinien 48 und 50 in einem Punkt auf dem Horizont 38 zusammen. Die Punkte, in denen sich die Strichlinien 44 und 46 und die Punktlinien 48 und 50 schneiden fallen, anders als in Figur 2, nicht zusammen, sondern haben einen Abstand.

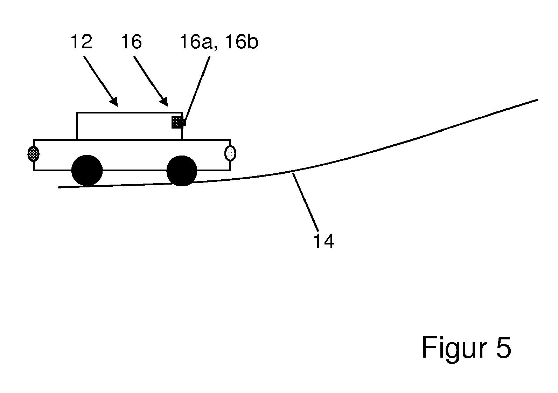

In Figur 5 ist eine Seitenansicht des Fahrzeugs 12 nach Figur 1 auf einer Fahrbahn 14 gezeigt, deren Verlauf dem detektierten Verlauf der Fahrbahn 14 nach Figur 4 entspricht. Aus den in Figur 4 gezeigten, jeweils aus den Bildern der linken Kamera 16a bzw. der rechten Kamera 16b des Stereokamerasystems 16 detektierten Abbildungen der linken bzw. rechten Fahrbahnmarkierung ergibt sich, dass die Fahrbahn 14 immer bzw. überwiegend bergauf verläuft. Dem erfindungsgemäßen Verfahren liegt die Annahme zugrunde, dass sich im statistischen Mittel die Fahrtstreckenabschnitte mit nach oben verlaufender Fahrbahn 14 und die Fahrtstreckenabschnitte mit nach unten verlaufender Fahrbahn 14 ausgleichen und somit im Mittel die Fahrbahn 14 eben ist. Wird in den mit Hilfe des Stereokamerasystems 16 aufgenommen Bildern mit Abbildungen des Erfassungsbereichs vor dem Fahrzeug 12 nun immer eine nach oben verlaufende Fahrbahn 14 detektiert, wird dies als ein Zeichen für einen Gierwinkelfehler gewertet und es wird ein Gierwinkelfehler detektiert.

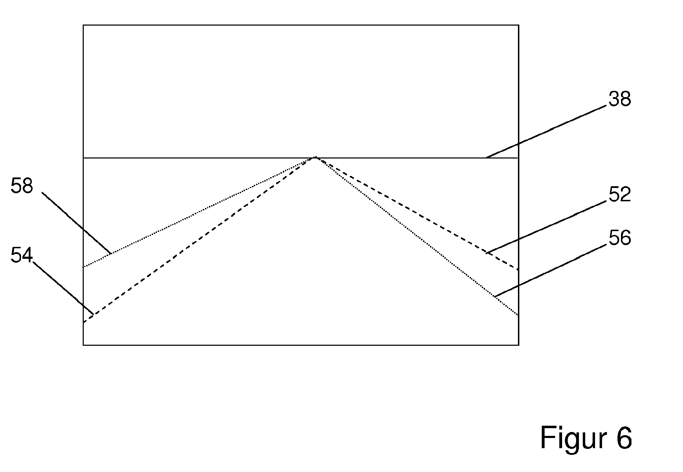

In Figur 6 ist die schematische Darstellung der Fahrbahnränder in einem überlagerten Bild von zwei gleichzeitig durch eine linke und eine rechte Einzelkamera16a, 16b des Stereokamerasystems 16 erfassten Bildern bei ebener Fahrbahn und Vorliegen eines Wankwinkelfehlers gezeigt. Die Bilder umfassen jeweils eine Abbildung eines Erfassungsbereichs vor dem Fahrzeug 12. Die Strichlinie 52 zeigt die aus den Bildern der rechten Einzelkamera 16b des Stereokamerasystems 16 mit Hilfe der Verarbeitungseinheit 22 detektierte Abbildung der rechten Fahrbahnmarkierung. Die Strichlinie 54 zeigt die aus den Bildern der rechten Einzelkamera 16b des Stereokamerasystems 16 mit Hilfe der Verarbeitungseinheit 22 detektierte Abbildung der linken Fahrbahnmarkierung. Ebenso zeigen die Punktlinien 56 und 58 die aus den Bildern der linken Einzelkamera 16a des Stereokamerasystems 16 mit Hilfe der Verarbeitungseinheit 22 detektierten Abbildungen der linken bzw. rechten Fahrbahnmarkierung. Die Strichlinien 52 und 54 laufen in einem Punkt auf einem Horizont 38 zusammen. Ebenso laufen die Punktlinien 56 und 58 in einem Punkt auf dem Horizont 38 zusammen. Die Punkte, in denen sich die Strichlinien 52 und 54 und die Punktlinien 56 und 58 schneiden, fallen zusammen. Im Vergleich zu Figur 2, die die Abbildungen der detektierten Fahrbahnmarkierungen ohne Wankwinkelfehler zeigt, sind die Strichlinie 52 und die Punktlinie 56 bzw. die Strichlinie 54 und die Punktlinie 58 zueinander verdreht, d.h. sie haben in gleicher Entfernung zum Fahrzeug nicht den gleichen Abstand zueinander.

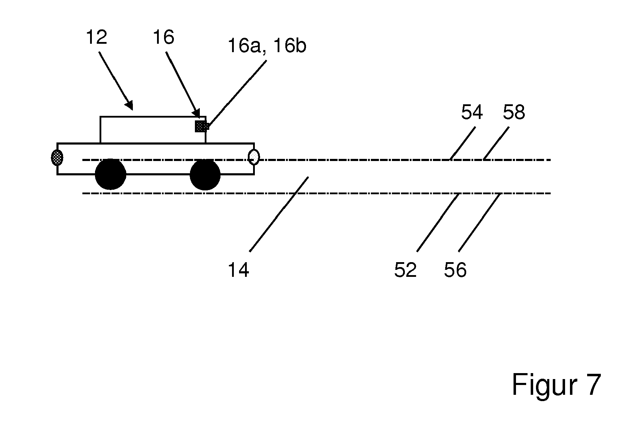

In Figur 7 ist eine Seitenansicht des Fahrzeugs 12 nach Figur 1 auf einer Fahrbahn 14, deren Verlauf dem detektierten Verlauf der Fahrbahn 14 nach Figur 6 entspricht, gezeigt. Aus den in Figur 6 gezeigten, jeweils aus den Bildern der linken Einzelkamera 16a bzw. der rechten Einzelkamera 16b des Stereokamerasystems 16 detektierten Abbildungen der rechten Fahrbahnmarkierung 52,56 und der linken Fahrbahnmarkierung 54, 58ergibt sich, dass zwischen der rechten Fahrbahnmarkierung 52, 56 und der linken Fahrbahnmarkierung 54, 58 ein ständiger Höhenversatz besteht. Wird in den mit Hilfe des Stereokamerasystems 16 aufgenommen Bildern mit Abbildungen des Erfassungsbereichs vor dem Fahrzeug 12 immer oder regelmäßig wiederholt ein solcher Höhenversatz zwischen der rechten Fahrbahnmarkierung 52, 56 und der linken Fahrbahnmarkierung 54, 56 detektiert, wird dies als ein Zeichen für einen Wankwinkelfehler gewertet und es wird ein Wankwinkelfehler festgestellt.

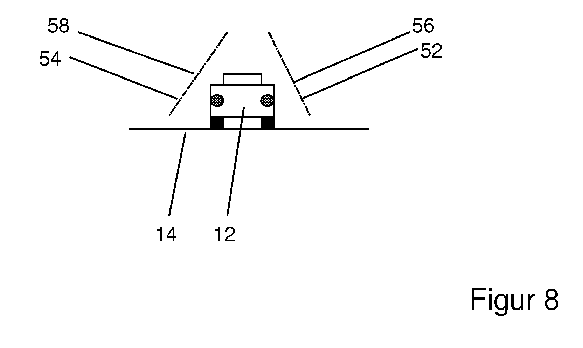

In Figur 8 ist eine Heckansicht des Fahrzeugs 12 nach Figur 7 auf einer Fahrbahn 14 gezeigt, deren Verlauf dem detektierten Verlauf der Fahrbahn 14 nach Figur 6 entspricht.

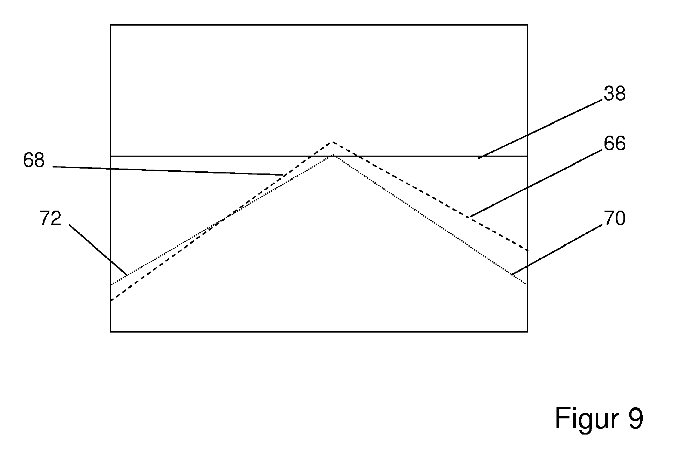

In Figur 9 ist die schematische Darstellung der Fahrbahnränder in einem überlagerten Bild von zwei gleichzeitig durch eine linke und eine rechte Einzelkamera16a, 16b des Stereokamerasystems 16 erfassten Bildern bei ebener Fahrbahn und Vorliegen eines Nickwinkelfehlers gezeigt. Die Bilder umfassen jeweils eine Abbildung eines Erfassungsbereichs vor dem Fahrzeug 12. Die Strichlinie 66 zeigt die aus den Bildern der rechten Einzelkamera 16b des Stereokamerasystems 16 mit Hilfe der Verarbeitungseinheit 22 detektierte Abbildung der rechten Fahrbahnmarkierung. Die Strichlinie 68 zeigt die aus den Bildern der rechten Einzelkamera 16b des Stereokamerasystems 16 mit Hilfe der Verarbeitungseinheit 22 detektierte Abbildung der linken Fahrbahnmarkierung. Ebenso zeigen die Punktlinien 70 und 72 die aus den Bildern der linken Einzelkamera 16a des Stereokamerasystems 16 mit Hilfe der Verarbeitungseinheit 22 detektierten Abbildungen der linken bzw. rechten Fahrbahnmarkierung. Die Strichlinien 66 und 68 laufen in einem Punkt zusammen, der nicht auf dem Horizont 28 liegt. Die Punktlinien 70 und 72 laufen in einem Punkt auf dem Horizont 38 zusammen.

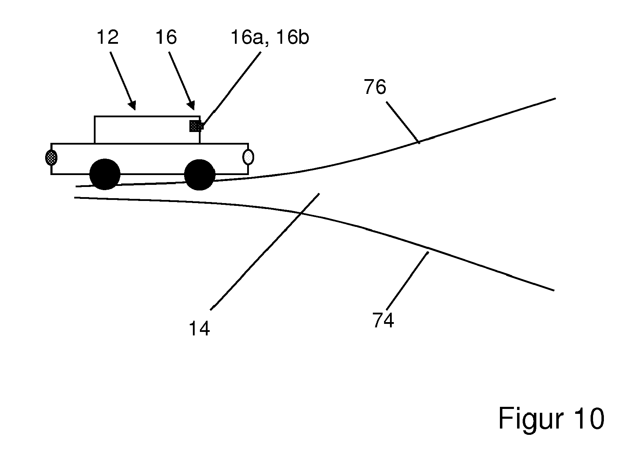

In Figur 10 ist eine Seitenansicht des Fahrzeugs 12 nach Figur 1 auf einer Fahrbahn 14 gezeigt, deren Verlauf dem detektierten Verlauf der Fahrbahn 14 nach Figur 9 entspricht. Aus den in Figur 9 gezeigten, jeweils aus den Bildern der linken Kamera 16a bzw. der rechten Kamera 16b des Stereokamerasystems 16 detektierten Abbildungen der linken bzw. rechten Fahrbahnmarkierung ergibt sich, dass die rechte Fahrbahnmarkierung 74 der Fahrbahn 14 immer bergab verläuft und die linke Fahrbahnmarkierung 76 immer bergauf verläuft. Die Fahrbahnmarkierungen 74, 76 haben also einen gegenläufigen Verlauf. Wird in den mit Hilfe des Stereokamerasystems 16 aufgenommen Bildern mit Abbildungen des Erfassungsbereichs vor dem Fahrzeug 12 ein gegenläufiger Verlauf der rechten Fahrbahnmarkierung 74 und der linken Fahrbahnmarkierung 76 der Fahrbahn 14 detektiert, wird dies als ein Zeichen für einen Nickwinkelfehler gewertet und es wird ein Nickwinkelfehler festgestellt.

Die mit Hilfe einer Verarbeitungseinheit 22 in einer mittels des Stereokamerasystems 16 aufgenommen Bildfolge aus Bildern mit Abbildungen eines Erfassungsbereich vor dem Fahrzeug 12 detektierten Verläufe der Fahrbahnmarkierung bzw. der Fahrbahnränder einer Fahrbahn 14 aus Sicht einer linken Kamera 16a und einer rechten Kamera 16b des Stereokamerasystems 16 des Fahrzeugs 12 haben bei Vorliegen eines Gierwinkelfehlers, eines Wankwinkelfehlers oder eines Nickwinkelfehlers jeweils einen eigenen, charakteristischen Verlauf, so dass ausgehend von einem solchen Verlauf ein Gierwinkelfehler, ein Wankwinkelfehler und/oder ein Nickwinkelfehler parallel in den parallel mit Hilfe der Einzelkameras 16a, 16b des Stereokamerasystems 16 aufgenommen Bildfolgenermittelt werden.

Wurde das Vorliegen eines Gierwinkelfehlers, eines Wankwinkelfehlers und/oder eines Nickwinkelfehlers ermittelt, erfolgt eine iterative Korrektur des bzw. der Fehler/s. Hierzu kann der Wert des jeweiligen Winkelfehlers bestimmt werden. Zur iterativen Korrektur wird das Stereokamerasystem 16 zunächst entsprechend nachkalibriert bevor dann mit Hilfe der Verarbeitungseinheit 22 in einer neuen, mittels der Einzelkameras 16a, 16b des Stereokamerasystems 16 aufgenommen Bildfolgen aus Bildern mit Abbildungen eines Erfassungsbereichs vor dem Fahrzeug 12 der Verlauf der Fahrbahnmarkierung bzw. Fahrbahnränder einer Fahrbahn 14 aus Sicht der linken Kamera 16a und der rechten Kamera 16b des Stereokamerasystems 16 des Fahrzeugs ermittelt wird. Ausgehend von den neu ermittelten Bildfolgen wird erneut das Vorliegen eines Gierwinkelfehlers, eines Wankwinkelfehlers und/oder eines ermittelt. Sollte nach wie vor ein Gierwinkelfehler, eine Wankwinkelfehler und/oder ein Nickwinkelfehler vorliegen, wird die Stereokamera erneut nachkalibriert und anschließend das Vorliegen eines Gierwinkelfehlers, eines Wankwinkelfehlers und/oder eines Nickwinkelfehlers mit Hilfe der neuen Bildfolgen überprüft. Dieser Ablauf wird solange wiederholt, bis kein Gierwinkel-, Wankwinkel-, und/oder Nickwinkelfehler mehr vorliegt.

Der Kalibriervorgang erfolgt automatisch. Eine Kalibriervorlage ist nicht nötig. Der Kalibriervorgang kann ohne Mitwirken eines Fahrers des Fahrzeugs 12 und völlig unbemerkt von diesem während der Fahrt des Fahrzeugs 12 erfolgen.

## Patentansprüche

1. Verfahren zum Ermitteln mindestens eines Kalibrierfehlers eines Stereokamerasystems,
bei dem mit Hilfe von mindestens zwei einzelnen Kameras (16a, 16b) des Stereokamerasystems (16) jeweils eine Bildfolge mit Bildern mit Abbildungen eines Erfassungsbereichs vor einem Fahrzeug (12) bei einer Fahrt des Fahrzeugs (12) entlang einer Fahrbahn (14) aufgenommen wird, wobei den Bildern der Bildfolgen entsprechende Bilddaten erzeugt werden,
die erzeugten Bilddaten verarbeitet werden, wobei der Verlauf mindestens eines Fahrbahnrandes der Fahrbahn (14) ermittelt wird, und
ausgehend vom ermittelten Verlauf des mindestens einen Fahrbahnrandes der Fahrbahn (14) mindestens ein Kalibrierfehler ermittelt wird.

2. Verfahren nach Anspruch 1, **dadurch gekennzeichnet, dass** als Kalibrierfehler ein Nickwinkelfehler, ein Gierwinkelfehler und/oder ein Wankwinkelfehler des Stereokamerasystems (16) ermittelt werden.

3. Verfahren nach einem der vorhergehenden Ansprüche, **dadurch gekennzeichnet, dass** für mindestens eine Einzelkamera (16a) des Stereokamerasystems (16) ein Kalibrierfehler ermittelt wird.

4. Verfahren nach Anspruch 3, **dadurch gekennzeichnet, dass** das Vorliegen eines Gierwinkelfehlers, eines Wankwinkelfehlers und/oder eines Nickwinkelfehlers parallel beim Verarbeiten der mit Hilfe der einzelnen Kameras ermittelten Bildfolge ermittelt wird.

5. Verfahren nach einem der vorhergehenden Ansprüche, **dadurch gekennzeichnet, dass** ein relativer Kalibrierfehler des Stereokamerasystems (16) infolge der relativen Lage der optischen Achsen der einzelnen Kameras (16a, 16b) zueinander ermittelt wird.

6. Verfahren nach einem der vorhergehenden Ansprüche, **dadurch gekennzeichnet, dass** der ermittelte Kalibrierfehler durch eine Änderung mindestens eines im Stereokamerasystem (16) und/oder in einem Bildverarbeitungssystem zum Verarbeiten der Bilddaten voreingestellten Parameters korrigiert wird.

7. Verfahren nach Anspruch 6, **dadurch gekennzeichnet, dass** als Parameter für mindestens eine Einzelkamera (16a, 16b) ein Offsetwert für den Gierwinkel, ein Offsetwert für den Wankwinkel und/oder ein Offsetwert für den Nickwinkel zur Korrektur des Kalibrierfehlers voreingestellt oder geändert wird.

8. Verfahren nach einem der vorhergehenden Ansprüche, **dadurch gekennzeichnet, dass** der mindestens eine Fahrbahnrand mit Hilfe mindestens einer Fahrbahnmarkierung oder dass eine Fahrbahnmarkierung als Fahrbahnrand ermittelt wird.

9. Verfahren nach einem der vorhergehenden Ansprüche, **dadurch gekennzeichnet, dass** beim Verarbeiten der Bilddaten der Bildfolgen der Verlauf des rechtem Fahrbahnrandes der Fahrbahn (14) und des linken Fahrbahnrandes der Fahrbahn (14) detektiert wird.

10. Verfahren nach einem der vorhergehenden Ansprüche, **dadurch gekennzeichnet, dass** ein Kalibrierfehler des Stereokamerasystems (16) iterativ korrigiert wird.

11. Verfahren nach einem der vorhergehenden Ansprüche, **dadurch gekennzeichnet, dass** das Ermitteln und Korrigieren des Kalibrierfehlers des Stereokamerasystems (16) automatisch ohne Mitwirken eines Fahrers des Fahrzeug (12) während der Fahrt des Fahrzeugs (12) durchgeführt wird.

12. Verfahren nach einem der vorhergehenden Ansprüche, **dadurch gekennzeichnet, dass** das Ermitteln und Korrigieren des Kalibrierfehlers des Stereokamerasystems (16) ohne Verwendung einer Kalibriervorlage durchgeführt wird.

13. Stereokamerasystem
mit mindestens zwei einzelnen Kameras (16a, 16b), die jeweils eine Bildfolge mit Bildern mit Abbildungen eines Erfassungsbereichs vor einem Fahrzeug (12) bei einer Fahrt des Fahrzeugs (12) entlang einer Fahrbahn (14) aufnehmen und den Bildern der Bildfolgen entsprechende Bilddaten erzeugen,
mit einer Verarbeitungseinheit (22), die die erzeugten Bilddaten verarbeitet,
wobei die Verarbeitungseinheit (22) den Verlauf mindestens eines Fahrbahnrandes der Fahrbahn (14) ermittelt, und
wobei die Verarbeitungseinheit (22) ausgehend vom ermittelten Verlauf des mindestens einen Fahrbahnrandes mindestens einen Kalibrierfehler des Stereokamerasystems (16) ermittelt.
